# EUROPEAN PATENT APPLICATION

(11) **EP 2 202 689 A1**
(43) Date of publication of application: **30.06.2010**
(21) Application number: 08172912.1
(22) Date of filing: 24.12.2008
(51) Int. Cl.: G06T 15/00, G06T 15/50

(54) **A processing unit**

(71) Applicant: STMicroelectronics R&D Ltd, Globe Park Marlow Buckinghamshire SL7 1YL (GB)
(72) Inventor: Robart, Mathieu, Bristol BS32 0BH (GB)
(74) Representative: Style, Kelda Camilla Karen

(57) **Abstract**

A processing unit comprising a memory configured to hold a plurality of colour stops; the processing unit configured to receive a reference offset and to select two of the colour stops in dependence on the reference offset; the processing unit further configured to calculate an interpolated colour in dependence on the selected colour stops and the reference offset.

## Description

### Field of the Invention

The invention relates to processing unit and method and in particular but not exclusively a processing unit and method for use in graphics pipelines.

### Background

The use of cross-platform application programming interfaces (API) for graphics libraries is known. Such APIs provide a common interface across a variety of platforms and simplify the programming of graphics hardware and the porting of software from one platform to another. The graphics library may be supported in software or hardware, or by a mixture of both. However, a number of advantages may be realised by accelerating the graphics library with hardware support.

One well known graphics API is OpenGL, the latest version of the OpenGL specification can be found in The OpenGL Graphics System: A Specification (for exampleVersion 2.1 or 3.0). The OpenGL API enables the programming of three-dimensional graphics on computer systems. A number of hardware rendering solutions exist that are compatible with OpenGL, and can be used to provide hardware accelerated high quality rendered images when programmed using the OpenGL API.

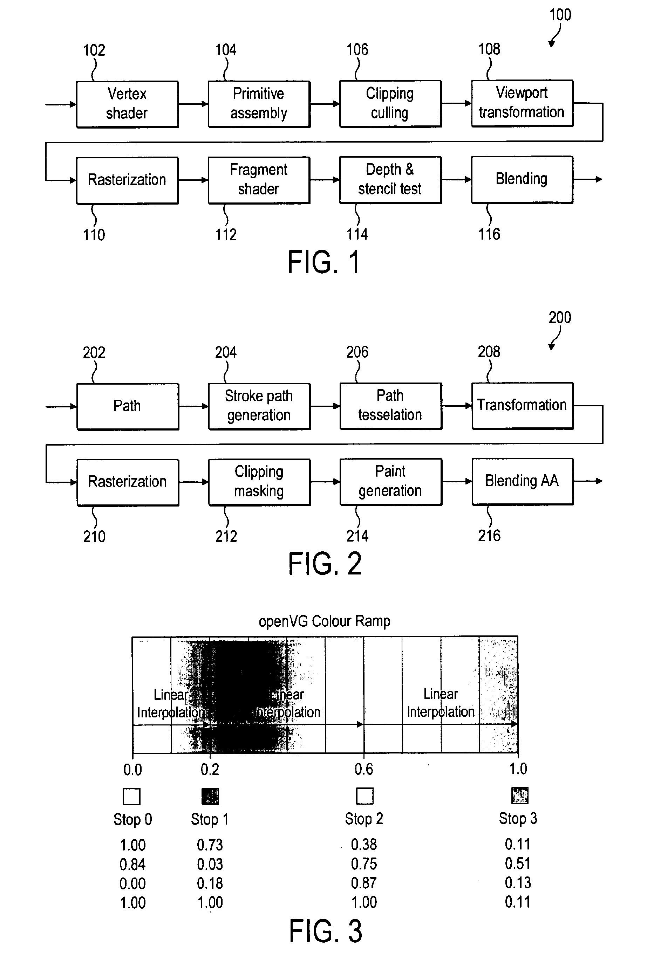

OpenGL ES is a variant of the OpenGL API that has been developed to provide full-function three dimensional graphics on embedded systems, for example: mobile phones; games consoles; and in-car entertainment systems. An example OpenGL ES 2.0 pipeline 100 is shown in Figure 1. The example OpenGL ES 2.0 pipeline of Figure 1 comprises a vertex shader 102 for processing vertices relating to points, line segments or triangles used to define the primitives used to render the image. The output of the vertex shader 102 comprises processed vertices that are passed on to primitive assembly stage 104 which assembles the processed vertices into primitives according to a mode argument of a drawing command being processed. The processed primitives are then passed to a clipping/culling stage 106 which identifies primitives, or parts of primitives that lie outside of the scene and clips or culls them, to avoid rendering superfluous elements. The processed scene information output by the clipping/culling stage 106 is then passed to viewport transformation stage 108 which transforms the coordinates of the processed primitives into window coordinates with the desired viewport position and properties.

Once the scene has been translated into window coordinates, the scene data is passed to the Rasterization stage 110 in which the primitives are converted to a two-dimensional image in generating the fragments (pixels and additional data) covered by the projected primitives. Once a primitive has been rasterized, a sequence of operations must be applied to each generated fragment. These operations are performed in the programmable fragment shader 112. The processed fragments are then passed to the depth & stencil test stage 114 which determines whether the fragment should be discarded due to it being placed behind another object in the scene, and therefore not visible in the final rendered scene. Fragments that are not discarded are passed to the blending unit 116 in which the fragment's R, G, B, and A (Red, Green, Blue and opacity/Alpha) values are combined with the destination R, G, B, and A values stored in the frame buffer at the fragment's destination location.

Further details may be found in the OpenGL ES 2.0 Common Profile Specification Version 2.0.23 (Full Specification). The OpenGL ES specification is based on a subset of the full OpenGL specification, and provides a low-level interface between software and graphics hardware as for OpenGL, but optimised for embedded systems.

Whilst OpenGL ES provides an interface for the programming of three dimensional and some two dimensional graphics, it has some limitations when used to render two dimensional vector graphics. Therefore, a further API, the OpenVG application programming interface (API) for two dimensional vector graphics, has been developed by the Khronos Group. An example OpenVG pipeline 200 is shown in Figure 2.

In the example pipeline of Figure 2, the first stage of the pipeline comprises Path stage 202 which defines the path to be drawn and defines whether the path is to be filled, stroked, or both. The path information is then passed to the stroke path generation stage 204 which acts on the received information, if it indicates that the path is to be stroked, to apply the stroke parameters in the users coordinate system to generate a new path that describes the stroked geometry. The processed path information is then passed to the Path Tessellation stage 206. Generally, the curves supported by OpenVG, for example: quadratic, cubic, arcs) are tessellated in small linear segments. The decomposition of curves into line segments is performed in the tessellation stage 206.

The current path is transformed in transformation stage 208 using the current path user to surface transformation. The transformed path is then passed to the rasterization stage 210 which renders the current path as a two dimensional image. The rasterized data is then passed to the clipping and masking stage 212 which clips pixels not lying within the bounds of the drawing surface. In the paint generation stage 214, the relevant current paint is used to define a colour and an alpha value for each pixel of the drawing surface. The rendered current path is then passed to the Blending and Anti-aliasing (AA) stage 216 which for each pixel converts the source colour and alpha values provided in the paint generation stage 214 into the destination colour space and blends them with the data present in the frame buffer at the destination location. Further details of the OpenVG API are available in the OpenVG Specification Version 1.0.1.

OpenVG can provide access to low-level hardware acceleration of vector graphics libraries for the rendering of two dimensional vector graphics. The standard has been optimised for use on low power handheld devices that require smooth, high-quality vector graphics within the constraints imposed on such low power devices.

As OpenVG is a relatively recent development, full hardware acceleration of this API is not yet widely supported, in contrast to OpenGL ES which enjoys relatively widespread hardware support for three dimensional graphics acceleration. However, it is difficult to use OpenGL ES compliant graphics hardware to efficiently support acceleration of the OpenVG API due to the differing requirements between rendering three dimensional and vector graphics, some features of OpenVG cannot be efficiently performed by the OpenGL ES 2.0 pipeline 100, shown in Figure 2.

For example, one part of the OpenVG specification which cannot be efficiently implemented in an OpenGL ES pipeline is the paint subsystem, or the paint generation stage 214. The paint subsystem provides a method of computing a colour value for a pixel based on interpolating a colour value between two of a number of stored colour stops, each defined as a colour value using a 32-bit floating point value per channel and associated with a 32-bit floating point offset value. Commonly, each colour value comprises red, green and blue channels, along with an α, or opacity/alpha, channel. According to the OpenVG 1.0.1 standard, up to 32 colour stops may be defined, necessitating a memory of 640 bytes.

Operation of the OpenVG paint subsystem will be described in relation to Figure 3. Figure 3 shows an example of an OpenVG colour ramp including four colour stops located at offset positions 0.0, 0.2, 0.6, and 1.0. Colour values may be requested for any offset position on the colour ramp, between stop positions 0.0 and 1.0, the output colour value being generated by interpolation of the colour stops defining the interval including the requested position. For example, the colour value for offset position 0.5 is determined by linear interpolation of the colour values of stop 1 (Red 0.73, Green 0.03, Blue 0.18, and Alpha 1.0) and stop 2 (Red 0.38, Green 0.75, Blue 0.87, and Alpha 1.0).

It is an aim of some embodiments of the present invention to address, or at least mitigate, some of the above identified problems of the prior art.

### Summary

According to an aspect of the invention, there is provided a processing unit comprising a memory configured to hold a plurality of colour stops; the processing unit configured to receive a reference offset and to select two of the colour stops in dependence on the reference offset; the processing unit further configured to calculate an interpolated colour in dependence on the selected colour stops and the reference offset.

According to an embodiment, the memory may be configured to store said plurality of colour stops in at least one table. The colour stops may comprise at least one red, green, blue and opacity/alpha colour channel values and an associated offset value.

According to a further embodiment the processing unit may comprise a compare unit configured to compare the reference offset with a respective offset value to select the two colour stops. The processing unit may further comprise an interface for receiving a reference offset from a fragment shader.

The processing unit may be further configured to provide the interpolated colour to the fragment shader using said interface.

According to a further aspect of the invention, there is provided a graphics pipeline comprising a fragment shader, wherein the fragment shader is coupled to at least processing unit as described above. The graphics pipeline may be compliant with the OpenGL ES standard.

According to a further aspect of the invention, there is provided a chipset including the processing unit.

According to a further aspect of the invention, there is provided a device comprising the processing unit, the chipset, or the graphics pipeline.

According to a further aspect of the invention, there is provided a method comprising receiving a request for an interpolated colour including a reference offset; selecting two colour stops from a plurality of colour stops in dependence on the reference offset; calculating an interpolated colour in dependence on the selected colour stops and the reference offset; and returning the interpolated colour to the requestor.

According to one embodiment, the colour stops may each comprise at least one red, green, blue and opacity/alpha colour channel value and an associated offset value. Selecting two colour stops may comprises comparing the reference offset with the offset value associated with each colour stop. Calculating an interpolated colour may comprise linearly interpolating between the two selected colour stops in dependence on the reference offset.

### Brief Description of the Drawings

Embodiments of the present invention will now be described by way of example only, and with reference to the accompanying figures, in which:
Figure 1 shows an overview diagram of a graphics pipeline in accordance with the OpenGL ES 2.0 specification.
Figure 2 shows an overview diagram of a graphics pipeline in accordance with the OpenVG specification.
Figure 3 shows an example OpenVG colour ramp.
Figure 4 shows a modified OpenGL ES pipeline in accordance with an embodiment of the invention.
Figure 5 illustrates the operation of a colour ramp interpolator according to an embodiment of the invention.
Figure 6 illustrates the operation of a traditional fragment shader when used to implement the OpenVG paint subsystem.
Figure 7 illustrates the operation of a fragment shader of Figure 4 when used to implement the OpenVG paint subsystem.

### Detailed Description of Embodiments

Embodiments of the invention are described herein by way of particular examples and specifically with reference to exemplary embodiments. It will be understood by one skilled in the art that the invention is not limited to the details of the specific embodiments given herein.

According to an embodiment of the invention, in order to efficiently implement the OpenVG paint subsystem as described by the OpenVG 1.0 specification in an OpenGL ES 2.0 programmable pipeline 100, there is provided a hardware extension to the pipeline. The hardware extension is arranged to efficiently compute a sRGBA (standard Red, Green, Blue, alpha) colour value interpolated from a set of colour stops stored in a colour ramp.

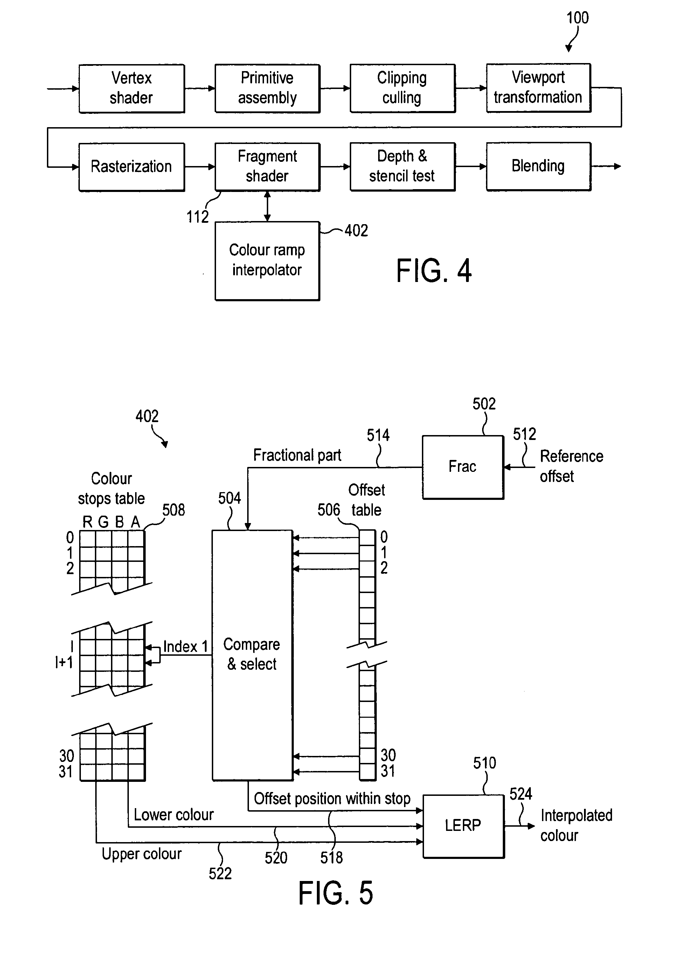

Figure 4 shows an OpenGL ES 2.0 pipeline 100 according to an embodiment of the invention. The pipeline of Figure 4 is similar to that shown in Figure 1, but further comprising a processing unit 402. The function of the pipeline stages 102, 104, 106, 108, 110, 112, 114, and 116 is similar to that described in relation to Figure 1. However, the programmable fragment shader 112, may be programmed to provide modified functionality as will be described.

The processing unit 402 is communicably coupled to the fragment shader 112, as shown in Figure 4. The shader unit 112 calculates a desired reference offset value 512 and provides this value to the interpolation unit 402. The reference value is received by the interpolation unit as a floating point value, and the received reference value is used to determine the two offsets which enclose the reference offset, and to select the colour stops corresponding to the determined offsets.

Once the correct colour stops have been determined, a new sRGBA colour is computed as the linear interpolation of the two fetched colour stops, according to the position of the reference offset within the selected stops. The determined colour is then returned to the fragment shader 112 as the result of the operation.

Figure 5 illustrates the operation of a colour ramp interpolation unit 402 according to an embodiment of the invention. The colour ramp interpolator 402 receives a reference offset value 512 from the shader 112 as a floating point value. The reference offset 512 is input to Frac unit 502 which determines the fractional part 514 of the reference offset, and outputs this value to the compare and select unit 504.

The colour ramp interpolator 402 includes a memory used to store a colour stops table 508 and an offset table 506. Each entry in the colour stops table 508 comprises a colour value defined by red, green, blue and alpha values. Each colour value has an associated offset value which is stored in the offset table 506. The colour data at a certain index of the colour stops table 508, combined with the offset table entry at the same index, defines the colour and position of one colour stop for the colour ramp. The colour stop table 508 and the offset table 506 comprise at least 32 entries in order to meet the minimum standard required by the OpenVG standard that at least 32 colour stops should be available for use with the colour ramp. The colour stops table 508 and the offset table 506 are communicably coupled to the compare and select unit 504. Outputs of the compare and select unit 504 and the colour stops table 508 are coupled in an input of a LERP, or linear interpolation unit, 510. An output of the LERP 510 provides the output of the colour ramp interpolator 402.

Compare and select unit 504 receives the fractional part 514 of the reference offset from the Frac unit 502 and compares this fractional part value with the contents of the offset table 506 to determine an index value i such that the fractional part lies between the offset values stored in the table at index i and index i+1. A parallel search consisting of a set of comparators and a priority encoder establishes the indices, i and i+1, of the correct colour stops.

The colour values stored at indices i and i+1 in the colour stops table 508 are then determined and passed to the LERP, or linear interpolation unit, 510. The compare and select unit 504 also outputs a value representative of the offset position within the stop, i.e. the position of the desired offset between the offset values stored at indices i and i+1 of the offset table 506. The offset position within the stop is input into the LERP 510. The LERP 510 uses the Lower and Upper colour values and the offset position within the stop to calculate a new colour as the linear interpolation of the two fetched colour stops, according to the position of the reference offset within the selected stops. The interpolated colour is then returned to the fragment shader 112 by the colour ramp interpolator 402.

Optionally, two additional colour stops may be added to the colour stops table 508 and the offset table 506 for storing the implicit extreme stops for the OpenVG colour ramp.

The form of the reference offset 512 used in the colour ramp interpolator 402 may depend on the ramp spread mode. The OpenVG specification describes a number of ramp spread modes to be supported, such as padded mode in which the reference offset supplied to the colour ramp interpolator must be claimped to 0.0 to 1.0. Other modes include repeat mode and mirrored mode in which the gradient pattern is either repeated or mirrored about the end stops.

The colour ramp interpolator 402 is optimized for calculating interpolated paint colours, and allows the fragment shader 112 to offload some of the required computations for generating the paint colour.

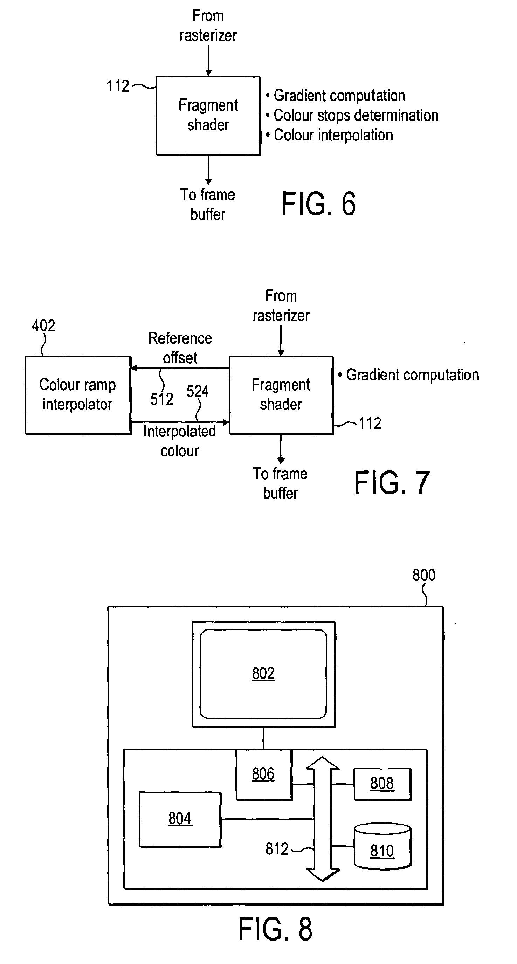

Figure 6 shows the operations that could be undertaken by the fragment shader 112 to implement the OpenVG paint subsystem in a graphics pipeline not including a colour ramp interpolator 402 according to an embodiment of the invention. The programmable functionality of the fragment shader 112 may allow the paint subsystem to be implemented, without the use of a colour ramp interpolator 402. The fragment shader 112 computes a gradient, or reference offset for which the paint colour should be interpolated. The fragment shader 112 then performs a search on the colour stops data to determine the colour stops bounding the reference offset position. Colour interpolation is then performed based on the reference offset and the determined colour stops.

However, the fragment shader 112 may not be well optimized for performing the colour stops determination and colour interpolation operations.

For example, the ES 2.0 fragment shader 112 may be programmed to store the colour stop values as uniform variables. However, limited resources in the fragment shader 112, as defined by the OpenGL ES 2.0 specification, mean that it may not possible to store the required 32 colour stops to fully support the OpenVG specification using the uniform variables.

In an alternative implementation, the required colour ramp may be stored as a texture generated by the system's driver. The colour ramp may then be accessed using a texture unit (not shown) coupled to the fragment shader 112. However, this implementation may have limited resolution and may suffer from zooming artefacts due to the imprecision of the stored colour ramp.

The values of the colour stops may themselves be stored in a texture memory, in order to overcome the uniform variable limit. However, determining the desired interpolated colour requires the execution of a sort process which would necessarily be performed by the shader 112. As the fragment shader 112 may not be efficiently designed for for such tasks, this can limit the effective speed of operation of an OpenGL ES pipeline implementing an OpenVG pipeline. Thus, the speed of the graphics rendering hardware may be significantly limited by such implementations.

Figure 7 illustrates the operation of a fragment shader 112 in a pipeline incorporating the hardware extension according to an embodiment of the invention. The fragment shader 112 computes a gradient, or reference offset 512, and provides this value to the colour ramp interpolator 512. Once the interpolated colour 524 has been determined, this value is returned to the fragment shader 112. Thus, in a system including the colour ramp interpolator 402, the fragment shader 112 is only required to perform the relatively simple gradient, or offset, computation.

In order to meet the required minimum standard set by the OpenVG standard, the colour ramp interpolator 402 should have sufficient memory to store at least 32 colour stops, that is at least 640 bytes. However, in some embodiments, the colour ramp interpolator 402 may be capable of storing a larger or smaller number of colour stops.

Calculation of the gradient, or offset, value in the fragment shader 112 may provide further benefits over the basic functionality required by the OpenVG standard, as the gradients are not limited to the standard defined modes. The fragment shader 112 is able to calculate the gradient on any desired basis, and could therefore be programmed to provide a non-linear gradient by correct choice of reference offset 512 to be supplied to the colour ramp interpolator 402.

Calls to the colour ramp interpolator 402 by the fragment shader are not required to be blocking, and the fragment shader may continue execution of pipeline instructions whilst the interpolated colour is calculated. Multiple colour ramp interpolators 402 may be provided, to allow parallel computation of interpolated colours to take place and to reduce the overall latency of the graphics pipeline.

Thus, an OpenGL ES 2.0 pipeline including one or more colour ramp interpolators, as described, may be capable of efficiently implementing the OpenVG paint subsystem in hardware, thereby allowing OpenVG libraries to be accelerated using the OpenGL ES hardware. This would avoid the need to provide separate OpenVG hardware in a device, leading to lower power and cheaper chipsets.

In some embodiments of the invention, a graphics pipeline including the processing unit may be implemented as part of a chipset, or integrated with other circuitry, for example SoC (system on a chip). Such chipsets may be used in any device requiring hardware acceleration of OpenVG. Examples may include mobile phones, games consoles, navigation systems, set-top boxes, PDAs, handheld devices, low-cost PCs, etc. In particular, such chipsets may be applicable to any device requiring hardware acceleration of interfaces/GUI (graphical user interface), maps, advertisments, animations, games, widgets/small UI, text display/glyphs, etc.

An example device 800 is shown in Figure 8. The device comprises a display 802 driven by graphics hardware 806 including an OpenGL ES pipeline 100 implemented with a processing unit in accordance with an embodiment of the invention. The device may further comprise a processor 804, a memory 808 and storage 810 coupled together through system bus 812. Such a device would be able to support efficient hardware acceleration of both OpenGL and OpenVG APIs using the modified OpenGL ES pipeline, leading to reduced complexity and lower costs. Furthermore, reducing the amount of circuitry required to support both APIs should lead to improved power consumption for the device.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A processing unit comprising:
a memory configured to hold a plurality of colour stops;
the processing unit configured to receive a reference offset and to select two of the colour stops in dependence on the reference offset;
the processing unit further configured to calculate an interpolated colour in dependence on the selected colour stops and the reference offset.

2. A processing unit according to claim 1, wherein the memory is configured to store said plurality of colour stops in at least one table.

3. A processing unit according to claim 1 or claim 2, wherein said colour stops comprise at least one red, green, blue and opacity/alpha colour channel values and an associated offset value.

4. A processing unit according to claim 3, wherein said processing unit comprises a compare unit configured to compare the reference offset with a respective offset value to select the two colour stops.

5. A processing unit of any previous claim further comprising an interface for receiving a reference offset from a fragment shader.

6. A processing unit of claim 5 wherein said processing unit is further configured to provide the interpolated colour to the fragment shader using said interface.

7. A graphics pipeline comprising a fragment shader, wherein said fragment shader is coupled to at least one processing unit according to any of claims 1 to 6

8. The graphics pipeline of claim 7, wherein said graphics pipeline is compliant with the OpenGL ES standard.

9. A chipset comprising the processing unit according to any of claims 1 to 6, or the graphics pipeline according to claim 7 or 8.

10. A device comprising a processing unit according to any of claims 1 to 6, or the graphics pipeline according to claim 7 or claim 8.

11. A method comprising:
receiving a request for an interpolated colour including a reference offset;
selecting two colour stops from a plurality of colour stops in dependence on the reference offset;
calculating an interpolated colour in dependence on the selected colour stops and the reference offset; and
returning the interpolated colour to the requestor.

12. The method according to claim 11 wherein said colour stops each comprise at least one red, green, blue and opacity/alpha colour channel value and an associated offset value.

13. The method according to claim 11 or claim 12 wherein selecting two colour stops comprises comparing the reference offset with the offset value associated with each colour stop.

14. The method according to any of claims 11 to 13 wherein calculating an interpolated colour comprises linearly interpolating between the two selected colour stops in dependence on the reference offset.
